# NEUE EUROPÄISCHE PATENTSCHRIFT

(11) **EP 1 728 706 B3**
(45) Veröffentlichungstag dieser Patentschrift: **01.01.2014**
(45) Hinweis auf die Patenterteilung: 03.12.2008
(21) Anmeldenummer: 06006064.7
(22) Anmeldetag: 24.03.2006
(51) Int. Cl.: B62D 5/097, A01B 69/00

(54) **Lenksystem für landwirtschaftliche Fahrzeuge**
Steering system for agricultural vehicles
Système de direction pour véhicules agricoles

(30) Priorität: 03.06.2005 DE 102005025966
(43) Veröffentlichungstag der Anmeldung: 06.12.2006
(73) Patentinhaber: CLAAS Selbstfahrende Erntemaschinen GmbH, 33428 Harsewinkel (DE)
(72) Erfinder: Brunnert, Andreas, 33397 Rietberg (DE)

(56) Entgegenhaltungen:
- EP-A- 1 295 778
- DD-A5- 106 934
- DE-A1- 19 716 201
- US-A- 5 234 070

## Beschreibung

Die Erfindung betrifft ein Lenksystem für landwirtschaftliche Fahrzeuge nach dem Oberbegriff des Anspruchs 1.

Aus der DD 106 934 ist ein Mähdrescher mit einer manuellen und einer automatischen Lenkeinheit zur Steuerung der Lenkzylinder bekannt. Während der automatischen Steuerung werden die Lenkzylinder mit denen die Maschine lenkbar ist über das Magnetventil druckbeaufschlagt, während sie bei manueller Steuerung über ein Lenkventil druckbeaufschlagt werden.

Nachteilig bei diesem Lenksystem ist, dass das Hydrautiköl je nach Steuerungsartentwedernurüberdas Lenkventil oder nur über das Magnetventil in die Lenkzylinder strömt, wobei der Volumenstrom in die Lenkzylinder jeweils konstant ist. Dies ist insbesondere beim schnellen Wenden der Erntmaschine im Vorgewende nachteilig, da der Bediener den gewünschten Lenkeinschlag der Räderso schnell wie möglich und mit so wenig Lenkradumdrehungen wie möglich erreichen möchte, damit der erforderliche Lenkaufwand verringert und die Zeit bis zum gewünschten Lenkwinkeleinschlag der Räderverkürzt wird und erdadurch beim manuellen Lenken entlastet wird.

Die EP 1 295 778 A1 offenbart ein Lenksystem für ein Fahrzeug, bei dem ein Lenkzylinder mittels einer Lenksteuereinheit SCU druckbeaufschlagt wird. Die Lenksteuereinheit weist ein hydraulisches Lenkventil auf, welches über ein Steuermittel betätigt wird. Die Betätigung des Steuermittels wird mittels eines Sensors überwacht, dessen Sensorsignale einer Steuereinheit zugeführt werden. Der Steuereinheit werden zusätzlich Sensorsignale eines mit den Kolbenstangen des Lenkzylinders zusammenwirkenden Sensors zugeführt. Aus einem Vergleich der Sensorsignale ermittelt die Steuereinheit eine mögliche Fehlfunktion der Lenksteuereinheit. Im Falle einer Fehlfunktion sendet die Steuereinheit Ansteuersignale an die Spulen eines elektrohydraulischen Ventils welches dann einen die Fehlfunktion ausgleichenden Ölvolumenstrom dem Lenkzylinders zuführt. Nachteilig an dem bekannten Lenksystem ist es, dass eine von der Lenksteuereinheit getrennte Druckbeaufschlagung des Lenkzylinders ausschließlich durch das elektrohydraulische Ventil nicht möglich ist, so dass damit der erforderliche Lenkaufwand nichtverringert und die Zeit bis zum gewünschten Lenkwinkeleinschlag der Räder nicht verkürzt wird und der Bediener dadurch beim manuellen Lenken nicht entlastet wird.

Bei der US 5,234.070 wird durch die Betätigung des Lenkrades ein Steuerdruck für die Steuerelemente eines elektrohydraulischen Ventils erzeugt, der dieses dann entsprechend verstellt. Die jeweilige Stellung des elektrohydraulischen Ventils bestimmt dann die Druckbeaufschlagung des Lenkzylinders. Eine von dem elektrohydraulischen Ventil getrennte Druckbeaufschlagung des Lenkzylinders zeigt das Dokument nicht.

Die DE 197 16 201 A1 offenbart ein gattungsgemäßes Lenksystem.

Der Erfindung liegt daher die Aufgabe zugrunde, die Nachteile des Standes der Technik zu vermeiden und insbesondere ein Lenksystem zu schaffen, bei dem die Lenkvorgänge beschleunigt werden können.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass bei einer Auslenkung des Steuermittels das hydraulische Lenkventil als auch das elektrohydraulische Ventil den Lenkzylinder gemeinsam druckbeaufschlagen, erhöht sich die Ölförderleistung in den Lenkzylinder, wodurch sich die Ein- und Ausfahrgeschwindigkeit der Kolbenstange des Stellzylinders erhöht und damit der gewünschte Einschlag der lenkbaren Räder schneller erreicht wird.

Vorteilhafterweise druckbeaufschlagen das elektrohydraulische Ventil als auch das hydraulische Lenkventil den Lenkzylinder gemeinsam, wenn die Auslenkung des Steuermittels außerhalb eines festgelegten Bereiches liegt, so dass beispielsweise beim Wenden des Fahrzeuges die Verstellung des Lenkeinschlagwinkels der Räder schnell erfolgt, um das Fahrzeug mitmöglichst geringem Wendekreis zu wenden.

Eine besonders einfache Ausgestaltung der Erfindung ergibt sich, wenn das hydraulische Lenkventil als Orbitrol ausgeführt ist, an den das Lenkrad direkt mechanisch koppelbar ist.

Indem das elektrohydraulische Ventil über eine Autopilotsteuerung gesteuert wird, kann das Fahrzeug automatisch spurgeführt werden, wodurch der Bediener des Fahrzeugs entlastet wird.

Das Steuermittel ist in vorteilhafter Weiterbildung der Erfindung ein Lenkrad und die Auslenkung des Steuermittels entspricht dem Drehwinkel des Lenkrad, wobei das Lenkrad aus einer Neutralstellung nach rechts und links auslenkbar ist, so dass das Orbitrol direkt über die Drehbewegung des Lenkrads betätigt werden kann.

Eine besonders einfache und daher kostengünstigeAusführungderErfindungergibtsich, wenn derfestgelegte Bereich durch einen linken und einen rechten Drehwinkelschwellwert begrenzt ist, der in einem Speicher der Autopilotsteuerung gespeichert ist.

Damit die Auslenkung des Steuermittels bei der Steuerung des elektrohydraulischen Ventils berücksichtigt werden kann, ist am Lenkrad ein Drehwinkelgeber angeordnet, der den Drehwinkel des Lenkrades erfasst, wobei der Drehwinkelgeber proportional abhängig von den Drehwinkeln ein Drehwinkelsignal generiert und der Autopilotsteuerung zuführt.

Indem die Autopilotsteuerung den von dem Drehwinkelgeber erfassten Drehwinkel des Lenkrads mit dem linken und/oder rechten vorgegebenen Drehwinkelschwellwertvergleicht und das elektrohydraulische Ventil in wenigstens eine erste Schaltstellung umschaltet, wenn der Drehwinkel dem linken Drehwinkelschwellwert gleicht oder ihn überschreitet und das elektrohydraulische Ventil in eine zweite Schaltstellung umschaltet, wenn der Drehwinkel dem rechten Drehwinkelschwellwert gleicht oder ihn überschreitet, regelt die Autopilotsteuerung die während der manuellen Lenkung in die Lenkzylinder geförderte Ölmenge.

In weiterer vorteilhafter Ausgestaltung ist dem Fahrzeug eine Hinterachse mit Rädern, wobei die Lenkzylinder die Räder um einen Lenkeinschlagwinkel verdrehen, so dass das Fahrzeug entlang einer gewünschten Fahrtroute lenkbar ist.

Um den tatsächlichen Lenkwinkeleinschlag der Räder zur Hinterachse auf einfache Weise einfach und damit kostengünstig zu messen und zu regeln, wird der Lenkeinschlagwinkel der Räder mit einem Radwinkelsensor erfasst, wobei der Radwinkelsensor proportional zum Lenkeinschlagwinkel ein Radeinschlag-Istwertsignal generiert und an die Autopilotsteuerung zu überträgt.

Damit das Fahrzeug automatisch spurgeführt werden kann, ist dem Fahrzeug ein automatischer Signalgeber zur Erzeugung elektrischen Soll-Lenksignalen zugeordnet, wobei die Soll-Lenksignale der Autopilotsteuerung zugeführt werden.

In vorteilhafter Ausgestaltung der Erfindung ist die automatische Lenkung über einen Schalter an der Autopilotsteuerung einschaltbar, so dass der Fahrer selbst entscheiden kann, wann die automatische Lenkung ihn unterstützen soll.

Eine einfache Regelung des elektrohydraulischen Ventils ergibt sich, wenn die Autopilotsteuerung abhängig von dem Radeinschlag-Istwertsignal und dem Soll-Lenksignal wenigstens ein Rechtslenksignal oder ein Linkslenksignal generiert und an das elektrohydraulische Ventil überträgt.

Vorteilhafterweise wird die automatische Lenkung ausgeschaltet, sobald sich das vom Drehwinkelgeber generierte Drehwinkelsignal verändert, damit beispielsweise bei plötzlichen, unvorhersehbaren Ereignissen der Bediener durch Betätigen des Lenkrads das Steuer direkt übemehmen kann.

Weitere vorteilhafte Ausgestaltungen sind Gegenstand weiterer Unteransprüche und werden nachfolgend an Hand des in mehrerer Figuren dargestellten Ausführungsbeispiels näher erläutert. Es zeigen:
Fig. 1 einen Mähdrescher bei der Erntefahrt auf dem Feld
Fig.2 einen schematischen Aufbau eines erfindungsgemäßen Lenksystems für die eine gelenkte Hinterachse mit einer manuellen Lenkung und einer automatischen Lenkung.

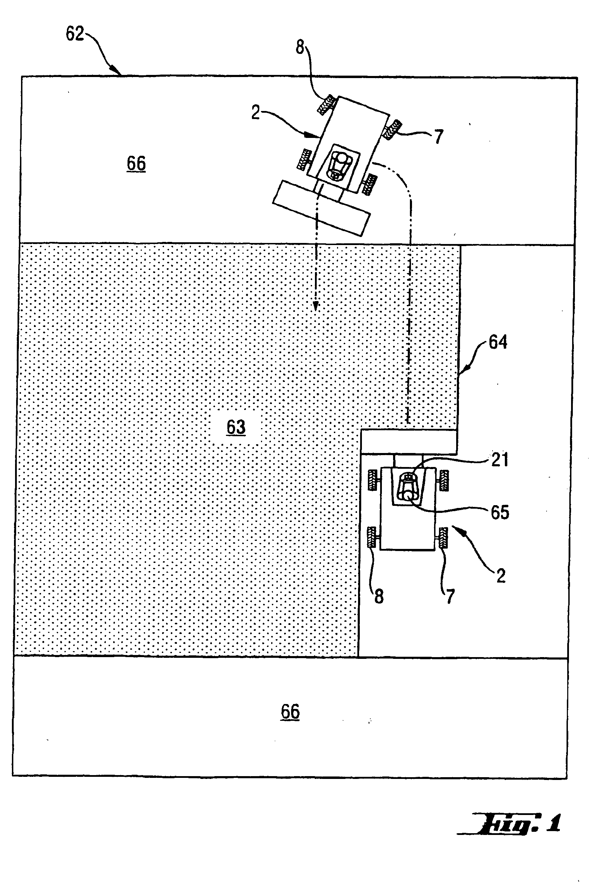

Fig. 1 stellt eine als Mähdrescher2 ausgeführte selbstfahrende Erntemaschine bei der Erntefahrt auf dem Feld 62 dar. Der Mähdreschers 2 weist ein Lenksystem mit einer mit einer automatischen Lenkung und einer manuellen Lenkung auf. Ein derartiges Lenksytem ist an sich bekannt und beispielsweise in der DE 197 19 939 beschrieben, deren Offenbarung durch Verweis hierauf mitaufgenommen wird. Fährt der Mähdrescher 2 in dem auf dem Feld 62 wachsenden, aus Getreide bestehenden Bestand 63 so wird er mit der automatischen Lenkung entlang einer Erntegutbearbeitungskante 64 spurgeführt. Fährt der Mähdrescher 2 aus dem Bestand 63 hinaus, betätigt der Bediener 65 des Mähdreschers 2 das Lenkrad 21 um die automatische Lenkung abzuschalten und wendet den Mähdrescher 2 manuell gesteuert außerhalb des Bestandes 63 im Vorgewende 66, um anschließend zurück in den Bestand 63 hineinzufahren. Um den Mähdrescher2 in einem Zug, das heißt ohne den Mähdrescher 2 beim Wenden zurückzusetzen, auf kleinster Fläche innerhalb des Vorgewendes 66 zu wenden, ist es erforderlich, dass die lenkbaren Räder 7, 8 schnellstmöglich einschlagen.

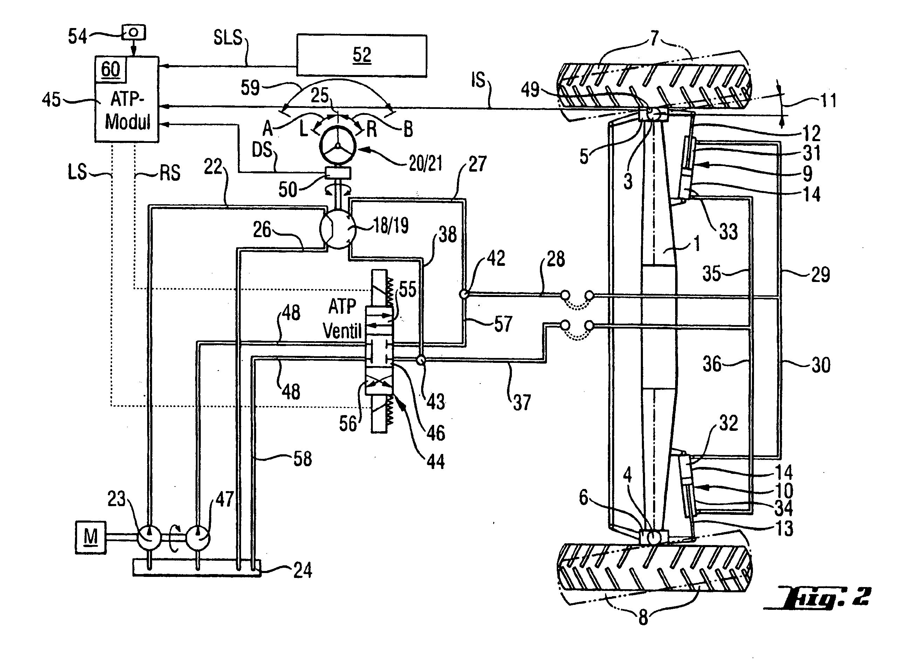

In der Fig.2 ist teilweise und schematisiert eine gelenkte Hinterachse 1 eines als Mähdrescher 2 ausgeführten landwirtschaftlichen Fahrzeugs dargestellt. An beiden Enden der Hinterachse 1 ist um eine Achse 3, 4 horizontal schwenkbar eine Radaufnahme 5, 6 gelagert an der jeweils ein Rad 7, 8 drehbar angeordnet ist. Zwischen jeder Radaufnahme 7, 8 und der Hinterachse 1 ist jeweils ein Lenkzylinder 9, 10 angelenkt, mit dem der Lenkeinschlagwinkel 11 der Räder 7, 8 verändert werden kann. Die Kolbenstangen 12, 13 der Lenkzylinder 9, 10 sind dabei jeweils gelenkig mit der zugehörigen Radaufnahme 5, 6 und die Zylindergehäuse 14, 15 der Lenkzylinder 9, 10 mit der Hinterachse 1 verbunden.
Die Steuerung der Lenkzylinder 9, 10 erfolgt bei manueller Lenkung des Mähdreschers über ein als Orbitrol 18 ausgeführtes hydraulisches Lenkventil 19, welches über ein als Lenkrad 20 ausgeführtes Steuermittel 21 manuell betätigt wird.
Das an sich bekannte und daher hier nicht näher erläuterte Orbitrol 18 wird über die Zuleitung 22 mit einer von einer Pumpe 23 aus einem Tank 24 geförderten Ölmenge druckbeaufschlagt. Befindet sich das Lenkrad 20, wie dargestellt, in einer Neutralstellung 25, fließt der Ölstrom durch das Orbitrol 18 hindurch über die Rücklaufleitung 24 zurück in den Tank.
Wird das Lenkrad 20 aus der Neutralstellung 25 nach links verdreht, fließt eine zur Drehung des Lenkrads proportionale Ölmenge durch das Orbitrol 18 hindurch über die Leitungen 27, 28, 29, 30 zu den Lenkzylindern 9, 10. Damit die Räder 7, 8 gleichsinnig einschlagen, ist die Leitung 29 an dem Kolbenstangendruckraum 31 des Lenkzylinders 9 angeschlossen, so dass die Kolbenstange 12 des Lenkzylinders 9 einfährt und die Leitung 30 ist an dem Kolbendruckraum 32 des Lenkzylinders 10 angeschlossen, so dass die Kolbenstange 13 des Lenkzylinders 10 ausfährt. Die beim Einfahren der Kolbenstange 12 in den Kolbendruckraum 33 des Lenkzylinders 9 und die beim Ausfahren der Kolbenstange 13 aus dem Kolbenstangendruckraum 34 des Lenkzylinders 10 verdrängten Ölmengen, fließen über die Leitungen 35 und 36 zusammen und strömen über die Leitungen 37, 38, durch das Orbitrol 18 und über die Rücklaufleitung 26 zurück in den Tank 24.

Wird das Lenkrad 20 dagegen aus der Neutralstellung nach rechts verdreht, fließt die Ölmenge durch das Orbitrol 18 über die Leitungen 38, 37, 35, 36 zu den Lenkzylindem 9, 10. Die Kolbenstange 12 des Lenkzylinders 9 fährt aus und die Kolbenstange 13 des Lenkzylinders 10 fährt ein. Die beim Ausfahren der Kolbenstange 12 aus dem Kolbenstangendruckraum 31 des Stellzylinders 9 verdrängte Ölmenge und die beim Einfahren der Kolbenstange 13 aus dem Kolbendruckraum 32 des Stellzylinders 10 verdrängte Ölmenge fließen über die Leitungen 29, 30 zusammen und anschließend über die Leitungen 27, 28, durch das Orbitrol 18 und über die Rücklaufleitung 26 in den Tank 24.
Die Leitungen 28 und 37 sind zusätzlich über Knotenpunkte 42, 43 mit einem elektrohydraulischen Ventil 44 verbunden, welches bei der automatischer Lenkung des Fahrzeugs die Lenkzylinder 9, 10 steuert. Das elektrohydraulische Ventil 44 wird mit einer von einer Pumpe 47 durch die Zuleitung 48 geförderten Ölmenge druckbeaufschlagt. Die Pumpen 23, 47 werden über einen Motor M gemeinsam und permanent angetrieben.

Bei der manuellen Lenkung über das Lenkrad 20 befindet sich das hydraulische Lenkventil 19 immer in einer Sperrstellung 46, so dass über die Leitungen 37, 28 kein Ölstrom durch das elektrohydraulische Ventil 44 fließen kann.
Bei der automatischen Lenkung erfolgt die Druckbeaufschlagung der Lenkzylinder 9, 10 über das elektrohydraulische Ventil 44, welches mithilfe einer an späterer Stelle näher erläuterten Autopilotsteuerung 45 gesteuert wird.
Das in Fig. 1 dargestellte Lenksystem weist an verschiedenen Stellen unterschiedliche Sensoren 49, 50, 52 auf. Hierzu zählen zum einen ein Radwinkelsensor 49, der den Lenkeinschlagwinkel 11 der Rades 7 erfasst. Des weiteren ein Drehwinkelgeber 50 der einen Drehwinkel 51 des Lenkrads 20 erfasst sowie ein automatischer Lenksignalgeber 52.
Als automatische Lenksignalgeber 52 ist beispielsweise ein Taster für die Orientierung in Reihenkulturen einsetzbar. Es ist jedoch auch möglich Echolot- oder Laser-Orientierungseinheiten als automatische Lenksignalgeber 52 einzusetzen. Ein Navigationssystem zur Bestimmung der Position und des Richtungsvektors der Fahrbewegung in Verbindung mit einer zuvor geplanten, digitalisierten Fahrtroute, welche in einem Speicher im Fahrzeug gespeichert ist, ist ebenfalls als automatischer Lenksignalgeber 52 einsetzbar.
Alle dargestellten Sensoren 49, 50, 52 sind mit der Autopilotsteuerung 45 verbunden.

Der Radwinkelsensor 49 erzeugt ein Radeinschlag-Istwertsignal IS, das sich proportional zum Lenkeinschlagwinkel 11 der Räder 7, 8 ändern. Der Drehwinkelgeber 50 erzeugt ein Drehwinkelsignal DS, das sich proportional zu den Drehwinkeln A, B des Lenkrades 20 ändert.
Der automatische Lenksignalgeber 52 erzeugt abhängig von der Auslenkung des Tasters ein Soll-Lenksignal SLS.
Die automatische Lenkung wird durch einen Schalter 54 an der Autopilotsteuerung 45 vom Bediener aktiviert und generiert abhängig von dem Radeinschlag-Istwertsignal IS und dem Soll-Lenksignal SLS entweder ein Linkslenksignal LS oder ein Rechtslen ksignal RL, die an das elektrohydraulische Ventil 44 übertragen werden, um den Mähdrescher 2 spurgeführt zu lenken.
Das Rechtslenksignal RS bewirkt eine Umschaltung des elektrohydraulischen Ventils 44 in die zweite Schaltstellung 55, ein Linkslenksignal LS bewirkt eine Umschaltung des elektrohydraulischen Lenkventils 44 in die erste Schaltstellung 56. Wird weder ein Rechtslenksignal RS noch ein Linkslenksignal LS generiert oder an das elektrohydraulische Ventil 44 übertragen, bewegt sich das elektrohydraulische Ventil 44 federbelastet zurück in die Sperrstellung 46.

Befindetsich das elektrohydraulische Lenkventil 44 in der zweiten Schaltstellung 56, um das Fahrzeug nach rechts zu lenken, fließt der von der Pumpe 47 geförderte Ölstrom durch das elektrohydraulische Ventil 44 und über die Leitungen 37, 35, 36 in die Lenkzylinder 9, 10.
Die beim Ausfahren der Kolbenstange 12 aus dem Kolbenstangendruckraum 31 des Stellzylinders 9 verdrängte Ölmenge und die beim Einfahren der Kolbenstange 13 in den Kolbendruckraum 32 des Stellzylinders 10 verdrängte Ölmenge fließen über die Leitungen 29, 30 zusammen und anschließend gemeinsam über die Leitungen 28, 57 durch das elektrohydraulische Ventil 44 und über die Rücklaufleitung 58 in den Tank 24.
Ist das elektrohydraulische Ventil 44 in die zweite Schaltstellung 55 geschaltet, um das Fahrzeug nach rechts zu lenken, fließt der von der Pumpe 47 geförderte Ölstrom durch das elektrohydraulische Ventil 44 hindurch über die Leitungen 57, 28, 29, 30 in die Lenkzylinder 9, 10. Die beim Einfahren der Kolbenstange 12 in den Kolbendruckraum 33 des Lenkzylinders 9 verdrängte Ölmenge und die beim Ausfahren der Kolbenstange 13 aus dem Kolbenstangendruckraum 34 des Lenkzylinders 10 verdrängten Ölmengen fließen über die Leitungen 35 und 36 zusammen und strömen gemeinsam über die Leitung 37, durch das elektrohydraulische Ventil 44 und über die Rücklaufleitung 58 zurück in den Tank 24.
Wird während der automatischen Lenkung das Lenkrad 20 betätigt und ändert sich dadurch das vom Drehwinkelgeber50 erzeugte Drehwinkelsignal DS, schaltet sich die automatische Lenkung sofort ab.
Die Autopilotsteuerung 45 prüft, ob die vom Drehwinkelgeber 50 erfassten Drehwinkel A, B innerhalb eines festgelegten Bereichs 59 liegen. Dieser festgelegte Bereich 59 ist über in einem Speicher 60 der Autopilotsteuerung 45 hinterlegten linken und rechten Drehwinkelschwellwerten L, R vorgegeben, die beispielsweise eine Lenkraddrehung von 45 Grad nach rechts und eine Lenkraddrehung von -45 Grad nach links, jeweils bezogen auf eine Nullstellung des Lenkrads 20, begrenzen. Während die automatische Lenkung nur leichte Lenkkorrekturen vornimmt, damit der Mähdrescher 2 der Fahrspur folgt, wird am Ende der Fahrspur der Mähdrescher 2 mit der manuellen Lenkung gewendet.
Wird das Lenkrad 20 bis zum linken Drehwinkelschwellwert L oder darüber hinaus nach links eingeschlagen, so schaltet die Autopilotsteuerung 45 das elektrohydraulische Ventil 44 in die erste Schaltstellung 56 und die Lenkzylinder 9, 10 werden erfindungsgemäß über das Orbitrol 18 und das elektrohydraulische Ventil 44 gemeinsam druckbeaufschlagt.
Die durch das Orbitrol 18 geförderte Ölmenge fließt mit der über das elektrohydraulische Ventil 44 geförderte Ölmenge im Knotenpunkt 42 zusammen, der resultierende Ölstrom fließt über die Leitungen 28, 29, 30 zu den Lenkzylindern 9, 10, so dass die Lenkzylinder 9, 10 im Vergleich zur Druckbeaufschlagung nur über das Orbitrol 18 oder nur überdas elektrohydraulische Ventil 44 schneller ein- und ausfahren und der gewünschte Lenkeinschlag der Räder 7, 8 eher erreicht wird.
Die beim Einfahren der Kolbenstange 12 in den Kolbendruckraum 33 des Lenkzylinders 9 und die beim Ausfahren der Kolbenstange 13 aus dem Kolbenstangendruckraum 34 des Lenkzylinders 10 verdrängten Ölmengen, fließen über die Leitungen 35 und 36 zusammen und strömen über die Leitungen 37, 38, durch das Orbitrol 18 und über die Rücklaufleitung 26 und/oder über die Rücklaufleitung 37, durch das elektrohydraulische Ventil 44 über die Rücklaufleitung 58 zurück in den Tank 24. Analog verhält es sich, wenn das Lenkrad 20 bis zum rechten Drehwinkelschwellwert R oder darüber hinaus nach rechts eingeschlagen wird. In diesem Fall schaltet die Autopilotsteuerung 45 das elektrohydraulische Ventil 44 in die erste Schaltstellung 55 um, so dass auch in diesem Fall die Lenkzylinder 9, 10 erfindungsgemäß über das Orbitrol 18 und das elektrohydraulische Ventil 44 gemeinsam druckbeaufschlagtwerden. Die durch das Orbitrol 18 geförderte Ölmenge fließt mit der über das elektrohydraulische Ventil 44 geförderten Ölmenge im Knotenpunkt 43 zusammen, der resultierende Ölstrom fließt über die Leitungen 37, 35, 36 zu den Lenkzylindern 9, 10.
Die beim Ausfahren der Kolbenstange 12 aus dem Kolbenstangendruckraum 31 des Stellzylinders 9 verdrängte Ölmenge und die beim Einfahren der Kolbenstange 13 in den Kolbendruckraum 32 des Stellzylinders 10 verdrängte Ölmenge fließen über die Leitungen 29, 30 zusammen und anschließend über die Leitungen 28, 57, durch das elektrohydraulische Ventil 44 und über die Rücklaufleitung 58 in den Tank 24 und/oder über die Leitung 27, durch das Orbitrol 18 und über die Rücklaufleitung 26 in den Tank 24.

Die Räder der Hinterachse können gemeinsam mit einem einzigen Plungerzylinder an Stelle der zwei getrennten Lenkzylinder gesteuert werden.

Das landwirtschaftliche Fahrzeug kann ein Traktor mit wenigstens einer weiteren lenkbaren Achse sein und die Lenkzylinder beider Achsen können mit einem erfindungsgemäßen Lenksystem gesteuert werden.

### Bezugszeichenliste:

- 1: Hinterachse
- 2: Mähdrescher
- 3: Achse
- 4: Achse
- 5: Radaufnahme
- 6: Radaufnahme
- 7: Rad
- 8: Rad
- 9: Lenkzylinder
- 10: Lenkzylinder
- 11: Lenkeinschlagwinkel
- 12: Kolbenstange
- 13: Kolbenstange
- 14: Zylindergehäuse
- 15: Zylindergehäuse
- 16:
- 17:
- 18: Orbitrol
- 19: hydraulisches Lenkventil
- 20: Steuermittel
- 21: Lenkrad
- 22: Zuleitung
- 23: Pumpe
- 24: Tank
- 25: Neutralstellung
- 26: Rücklaufleitung
- 27: Leitung
- 28: Leitung
- 29: Leitung
- 30: Leitung
- 31: Kolbenstangendruckraum
- 32: Kolbendruckraum
- 33: Kolbendruckraum
- 34: Kolbenstangendruckraum
- 35: Leitung
- 36: Leitung
- 37: Leitung
- 38: Leitung
- 40:
- 41:
- 42: Knoten
- 43: Knoten
- 44: elektrohydraulisches Ventil
- 45: Autopilotsteuerung
- 46: Sperrstellung
- 47: Pumpe
- 48: Zuleitung
- 49: Radwinkelsensor
- 50: Drehwinkelgeber
- 51: Drehwinkel
- 52: autom. Lenksignalgeber
- 53:
- 54: Schalter
- 55: zweite Schaltstellung
- 56: erste Schaltstellung
- 57: Leitung
- 58: Rücklaufleitung
- 59: festgelegter Bereich
- 60: Speicher
- 61:
- 62: Feld
- 63: Bestand
- 64: Erntegutbearbeitungskante
- 65: Bediener
- 66: Vorgewende
- M: Motor
- IS: Radeinschlag-Istwertsignal
- DS: Drehwinkelsignal
- RS: Rechtslenksignal
- LS: Linkslenksignal
- DS: Drehwinkelsignal
- L: linker Drehwinkelschwellwert
- R: rechter Drehwinkelschwellwert
- SLS: Sollwinkel-Signal

## Patentansprüche

1. Lenksystem für landwirtschaftliche Fahrzeuge, umfassend wenigstens einen Lenkzylinder (9, 10), sowie ein hydraulisches Lenkventil (19), das über ein Steuermittel (21) betätigt wird und ein elektrohydraulisches Ventil (44), wobei das hydraulische Lenkventil (19) und das elektrohydraulische Ventil (44) getrennt voneinander den wenigstens einen Lenkzylinder (9, 10) druckbeaufschlagen können,
**dadurch gekennzeichnet,**
**dass** bei einer Auslenkung des Steuermittels (21) das hydraulische Lenkventil (19) und das elektrohydraulische Ventil (44) den Lenkzylinder (9, 10) gemeinsam druckbeaufschlagen, wobei das elektrohydraulische Ventil (44) als auch das hydraulische Lenkventil (19) den Lenkzylinder (9, 10) gemeinsam druckbeaufschlagen, wenn die Auslenkung des Steuermittels (21) ausserhalb zumindest eines festgelegten Bereiches (59) liegt und der festgelegte Bereich (59) durch einen linken und einen rechten Drehwinkelschwellwert (L, R) begrenzt ist, die in einem Speicher (60) der Autopilotsteuerung (45) gespeichert sind.

2. Lenksystem nach wenigstens einem der vorhergehenden Ansprüche,
**dadurch gekennzeichnet,**
**dass** das hydraulische Lenkventil (19) als Orbitrol (18) ausgeführt ist.

3. Lenksystem nach wenigstens einem der vorhergehenden Ansprüche,
**dadurch gekennzeichnet,**
**dass** das elektrohydraulische Ventil (44) über eine Autopilotsteuerung (45) gesteuert wird.

4. Lenksystem nach wenigstens einem der vorhergehenden Ansprüche,
**dadurch gekennzeichnet,**
**dass** das Steuermittel (21) ein Lenkrad (20) ist und die Auslenkung des Steuermittels (21) wenigstens einem Drehwinkel (A, B) des Lenkrads (20) entspricht, wobei das Lenkrad (20) aus einer Neutralstellung (25) nach links und rechts auslenkbar ist.

5. Lenksystem nach wenigstens einem der vorhergehenden Ansprüche,
**dadurch gekennzeichnet,**
**dass** am Lenkrad (20) ein Drehwinkelgeber (50) angeordnet ist, der den Drehwinkel (A, B) des Lenkrads (20) erfasst, wobei der Drehwinkelgeber (50) proportional abhängig von dem Drehwinkel (A, B) ein Drehwinkelsignal (DS) generiert und der Autopilotsteuerung (45) zuführt.

6. Lenksystem nach wenigstens einem der vorhergehenden Ansprüche,
**dadurch gekennzeichnet,**
**dass** die Autopilotsteuerung (45) die von dem Drehwinkelgeber (50) erfassten Drehwinkel (A, B) des Lenkrads (20) mit dem linken und/oder rechten vorgegebenen Drehwinkelschwellwert (L, R) vergleicht und das elektrohydraulische Ventil (44) in wenigstens eine erste Schaltstellung (56) umschaltet, wenn der Drehwinkel (A) dem linken Drehwinkelschwellwert (L) gleicht oder den linken Drehwinkelschwellwert (L) überschreitet und das elektrohydraulische Ventil (44) in wenigstens eine zweite Schaltstellung (55) umschaltet, wenn der Drehwinkel (B) dem rechten Drehwinkelschwellwert (R) gleicht oder den Drehwinkelschwellwert (R) überschreitet.

7. Lenksystem nach wenigstens einem der vorhergehenden Ansprüche,
**dadurch gekennzeichnet,**
**dass** dem Fahrzeug wenigstens eine Hinterachse (1) mit Rädern (7, 8) zugeordnet ist und die Lenkzylinder (9, 10) die Räder (9, 10) um einen Lenkeinschlagwinkel (11) verdrehen.

8. Lenksystem nach wenigstens einem der vorhergehenden Ansprüche,
**dadurch gekennzeichnet,**
**dass** der Lenkeinschlagwinkel (11) mit einem Radwinkelsensor (49) erfasst wird, wobei der Radwinkelsensor (49) proportional abhängig vom Lenkeinschlagwinkel (11) ein Radeinschlag-Istwertsignal (IS) generiert und an die Autopilotsteuerung (45) überträgt.

9. Lenksystem nach wenigstens einem der vorhergehenden Ansprüche,
**dadurch gekennzeichnet,**
**dass** dem Fahrzeug ein automatischer Lenksignalgeber (52) zur Erzeugung von elektrischen Soll-Lenksignalen (SLS) zugeordnet ist und die generierten Soll-Lenksignale (SLS) der Autopilotsteuerung (45) zugeführt werden.

10. Lenksystem nach wenigstens einem der vorhergehenden Ansprüche,
**dadurch gekennzeichnet,**
**dass** die automatische Lenkung über einen Schalter (54) an der Autopilotsteuerung (45) einschaltbar ist.

11. Lenksystem nach wenigstens einem der vorhergehenden Ansprüche,
**dadurch gekennzeichnet,**
**dass** die Autopilotsteuerung (45) abhängig von dem Radeinschlag-Istwertsignal (IS) und dem Soll-Lenksignal (SLS) wenigstens ein Rechtslenksignal (RS) oder ein Linkslenksignal (LS) generiert und an das elektrohydraulische Ventil (44) überträgt.

12. Lenksystem nach wenigstens einem der vorhergehenden Ansprüche,
**dadurch gekennzeichnet,**
**dass** die automatische Lenkung ausgeschaltet wird, sobald sich das vom Drehwinkelgeber (50) generierte Drehwinkelsignal (DS) verändert.

## Claims

1. A steering system for agricultural vehicles comprising at least one steering cylinder (9, 10) and a hydraulic steering valve (19) which is actuated by way of a control means (21) and an electrohydraulic valve (44), wherein the hydraulic steering valve (19) and the electrohydraulic valve (44) can pressurise separately from each other the at least one steering cylinder (9, 10),
**characterised in that**
in a deflection of the control means (21) the hydraulic steering valve (19) and the electrohydraulic valve (44) jointly pressurise the steering cylinder (9, 10), wherein the electrohydraulic valve (44) and also the hydraulic steering valve (19) jointly pressurise the steering cylinder (9, 10) when the deflection of the control means (21) is outside at least a fixed region (59) and the fixed region (59) is defined by a left-hand and a right-hand rotary angle threshold value (L, R) which are stored in a memory (60) of the autopilot control (45).

2. A steering system according to claim 1 **characterised in that** the hydraulic steering valve (19) is in the form of an orbitrol (18).

3. A steering system according to at least one of the preceding claims **characterised in that** the electrohydraulic valve (44) is controlled by way of an autopilot control (45).

4. A steering system according to at least one of the preceding claims **characterised in that** the control means (21) is a steering wheel (20) and deflection of the control means (21) corresponds at least to a rotary angle (A, B) of the steering wheel (20), wherein the steering wheel (20) is deflectable out of a neutral position (25) towards the left and the right.

5. A steering system according to at least one of the preceding claims **characterised in that** arranged on the steering wheel (20) is a rotary angle sender (50) which detects the rotary angle (A, B) of the steering wheel (20), wherein the rotary angle sender (50) generates a rotary angle signal (DS) proportionally in dependence on the rotary angle (A, B) and passes it to the autopilot control (45).

6. A steering system according to at least one of the preceding claims **characterised in that** the autopilot control (45) compares the rotary angles (A, B) of the steering wheel (20), that are detected by the rotary angle sender (50), to the left-hand and/or right-hand predetermined rotary angle threshold value (L, R) and switches over the electrohydraulic valve (44) into at least one first switching position (56) when the rotary angle (A) is equal to the left-hand rotary angle threshold value (L) or exceeds the left-hand rotary angle threshold value (L) and switches over the electrohydraulic valve (44) into at least one second switching position (55) when the rotary angle (B) is equal to the right-hand rotary angle threshold value (R) or exceeds the rotary angle threshold value (R).

7. A steering system according to at least one of the preceding claims **characterised in that** at least one rear axle (1) with wheels (7, 8) is associated with the vehicle and the steering cylinders (9, 10) turn the wheels (7, 8) through a steering lock angle (11).

8. A steering system according to at least one of the preceding claims **characterised in that** the steering lock angle (11) is detected with a wheel angle sensor (49), wherein the wheel angle sensor (49) generates a wheel lock actual value signal (IS) proportionally in dependence on the steering lock angle (11) and transmits it to the autopilot control (45).

9. A steering system according to at least one of the preceding claims **characterised in that** an automatic steering signal sender (52) for producing electrical reference steering signals (SLS) is associated with the vehicle and the generated reference steering signals (SLS) are passed to the autopilot control (45).

10. A steering system according to at least one of the preceding claims **characterised in that** the automatic steering can be switched on by way of a switch (54) at the autopilot control (45).

11. A steering system according to at least one of the preceding claims **characterised in that** the autopilot control (45) generates at least a right-hand steering signal (RS) or a left-hand steering signal (LS) in dependence on the wheel lock actual value signal (IS) and the reference steering signal (SLS) and transmits same to the electrohydraulic valve (44).

12. A steering system according to at least one of the preceding claims **characterised in that** the automatic steering is switched off as soon as the rotary angle signal (DS) generated by the rotary angle sender (50) alters.

## Revendications

1. Système de direction pour véhicules agricoles, comprenant au moins un vérin de direction (9, 10) ainsi qu'une valve de direction (19) hydraulique, qui est actionnée par l'intermédiaire d'un moyen de commande (21), et un distributeur (44) électrohydraulique, la valve de direction (19) hydraulique et le distributeur (44) électrohydraulique pouvant appliquer, séparément l'un de l'autre, une pression au vérin de direction (9, 10), au nombre d'au moins un,
**caractérisé en ce que**
lors d'une déviation du moyen de commande (21), la valve de direction (19) hydraulique et le distributeur (44) électrohydraulique appliquent ensemble une pression au vérin de direction (9, 10), le distributeur (44) électrohydraulique ainsi que la valve de direction (19) hydraulique appliquant ensemble une pression au vérin de direction (9, 10) lorsque la déviation du moyen de commande (21) se situe à l'extérieur d'une plage définie (59) et la plage définie (59) est délimitée par une valeur seuil gauche et une valeur seuil droite d'angle de rotation (L, R) qui sont stockées dans une mémoire (60) de la commande de pilotage automatique (45).

2. Système de direction selon au moins une des revendications précédentes, **caractérisé en ce que** la valve de direction (19) hydraulique est réalisée sous la forme d'un orbitrol (18).

3. Système de direction selon au moins une des revendications précédentes, **caractérisé en ce que** le distributeur (44) électrohydraulique est activé par l'intermédiaire d'une commande de pilotage automatique (45).

4. Système de direction selon au moins une des revendications précédentes, **caractérisé en ce que** le moyen de commande (21) est un volant (20), et la déviation du moyen de commande (21) correspond au moins à un angle de rotation (A, B) du volant (20), le volant (20) pouvant être dévié vers la gauche et vers la droite à partir d'une position neutre (25).

5. Système de direction selon au moins une des revendications précédentes, **caractérisé en ce qu'**il est prévu sur le volant (20) un capteur de position angulaire (50) qui mesure l'angle de rotation (A, B) du volant (20), le capteur de position angulaire (50) générant un signal d'angle de rotation (DS), qui est proportionnel à l'angle de rotation (A, B), et le transmettant à la commande de pilotage automatique (45).

6. Système de direction selon au moins une des revendications précédentes, **caractérisé en ce que** la commande de pilotage automatique (45) compare les angles de rotation (A, B) du volant (20), mesurés par le capteur de position angulaire (50), avec la valeur seuil gauche et/ou droite d'angle de rotation (L, R) prédéterminée, et commute le distributeur (44) électrohydraulique dans au moins une première position (56) lorsque l'angle de rotation (A) se rapproche de la valeur seuil gauche d'angle de rotation (L) ou dépasse la valeur seuil gauche d'angle de rotation (L), et commute le distributeur (44) électrohydraulique dans au moins une deuxième position (56) lorsque l'angle de rotation (B) se rapproche de la valeur seuil droite d'angle de rotation (R) ou dépasse la valeur seuil droite d'angle de rotation (R).

7. Système de direction selon au moins une des revendications précédentes, **caractérisé en ce qu'**il est associé au véhicule au moins un essieu arrière (1) avec des roues (7, 8), et les vérins de direction (9, 10) font tourner les roues (9, 10) d'un angle de braquage (11).

8. Système de direction selon au moins une des revendications précédentes, **caractérisé en ce que** l'angle de braquage (11) est mesuré par un capteur d'angle de roue (49), le capteur d'angle de roue (49) générant un signal de valeur effective de braquage de roue (IS), proportionnel à l'angle de braquage (11), et le transmettant à la commande de pilotage automatique (45).

9. Système de direction selon au moins une des revendications précédentes, **caractérisé en ce qu'**il est associé au véhicule un émetteur de signal de direction (52) automatique, destiné à générer des signaux de direction de consigne (SLS) électriques, et les signaux de direction de consigne (SLS) générés sont transmis à la commande de pilotage automatique (45).

10. Système de direction selon au moins une des revendications précédentes, **caractérisé en ce que** la direction automatique peut être activée par l'intermédiaire d'un interrupteur (54) prévu sur la commande de pilotage automatique (45).

11. Système de direction selon au moins une des revendications précédentes, **caractérisé en ce que** la commande de pilotage automatique (45) génère au moins un signal de direction à droite (RS) ou un signal de direction à gauche (LS), en fonction du signal de valeur effective de braquage de roue (IS) et du signal de direction de consigne (SLS), et le transmet au distributeur (44) électrohydraulique.

12. Système de direction selon au moins une des revendications précédentes, **caractérisé en ce que** la direction automatique est désactivée dès que le signal d'angle de rotation (DS) généré par le capteur de position angulaire (50) varie.
